# EUROPEAN PATENT APPLICATION

(11) **EP 1 676 876 A1**
(43) Date of publication of application: **05.07.2006**
(21) Application number: 05112698.5
(22) Date of filing: 22.12.2005
(51) Int. Cl.: C08K 5/3415, C08K 5/372, C08K 5/378, C08L 21/00

(54) **Amine free vulcanizable rubber**

(30) Priority: 30.12.2004 US 640790 P
(71) Applicant: THE GOODYEAR TIRE & RUBBER COMPANY, Akron, Ohio 44316-0001 (US)
(72) Inventor: D'sidocky, Richard Michael, 44266, Ravenna (US); Gillick, James Gregory, 44313, Akron (US); Baldwin, JR, Donald William, 43551, Perrysburg (US)
(74) Representative: Kutsch, Bernd

(57) **Abstract**

One aspect of the invention is directed to a rubber cure system that includes an amine-free accelerator; a bismaleimide; and an alkylphenol disulfide. Another aspect of the invention is directed to a rubber composition including this rubber cure system and at least one sulfur-vulcanizable elastomer containing olefinic unsaturation.

## Description

### Field of the Invention

This invention is directed to a cure system for a rubber composition according to claim 1, and to a rubber composition incorporating such a cure system according to claim 7.

### Description of Related Art

In developing rubber compositions, cure systems have been proposed that include amine-containing curative compounds. Such curative compounds typically have been used because of their good scorch protection providing processing safety and fast cure rate behavior to rubber formulations.

While amine-containing curatives may provide good processing safety and fast cure rates, they do so at the expense of other desirable properties. For example, in rubber stocks containing polyester cord, they have proven detrimental to good rubber-cord adhesion. Therefore, there is a need for an alternative curative system and resulting rubber composition.

### Summary of the Invention

One aspect of the invention is directed to a rubber cure system (i.e., rubber cure composition) that includes: an amine-free accelerator; a bismaleimide; and an alkylphenol disulfide. Another aspect of the invention is directed to a rubber composition including: at least one sulfur-vulcanizable elastomer containing olefinic unsaturation; an amine-free accelerator; a bismaleimide; and an alkylphenol disulfide. In a further aspect, the invention includes a rubber composition in the form of a product. If desired, the product may include a reinforcing cord comprising a polyester. Examples of products of the invention include a tire ply, a tire belt, a tire overlay, a pneumatic tire, an airspring, a conveyor belt, a hose, and a power transmission belt.

### Description of Preferred Embodiments of the Invention

A rubber cure system, in accordance with the principles of the invention, may be formed by combining components including: an amine-free accelerator; a bismaleimide; and an alkylphenol disulfide. The rubber cure system also may be used in conjunction with any suitable elastomer or combination of elastomers in order to form a rubber composition of the invention. For example, a sulfur-vulcanizable elastomer containing olefinic unsaturation may be used.

The amine-free accelerator may be any suitable accelerator or combination of accelerators. For example, if desired, the amine-free accelerator may be a benzothiazole disulfide. Advantageously, a 2-mercaptobenzothiazole may be used.

In addition, any suitable bismaleimide or combination of bismaleimides may be used. If desired, the bismaleimide may be of the general formula: 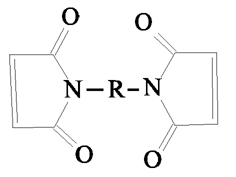 wherein R is divalent and is selected from the group consisting of acyclic aliphatic groups having from 2 to 16 carbon atoms, cyclic aliphatic groups having from 5 to 20 carbon atoms, aromatic groups having from 6 to 18 carbon atoms, and alkylaromatic groups having from 7 to 24 carbon atoms, and
wherein R may contain a hetero atom selected from O, N, and S. Advantageously, N,N'-meta-phenylenedimaleimide may be used.

Any suitable alkylphenol disulfide polymer or combination of such polymers may be used. If desired, the alkylphenol disulfide polymer may be of the general formula: 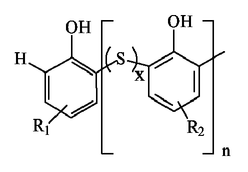 wherein R₁ and R₂ independently are selected from linear or branched C₁₋₁₀ alkyl groups, x independently is selected from an integer of 1 to 10, and n is an integer from 1 to 100. Also, each of R₁ and R₂ independently may be a tertiary alkyl group, meta- or para- substituted on the aromatic group with respect to the hydroxy group. Advantageously, the polymer may be Vultac 7® from Sovereign Chemical Co.

The components of the rubber cure system may be used in any suitable amounts. Exemplary ranges include: from 0.5 phr to 2.0 phr amine-free accelerator; from 0.5 phr to 3.0 phr bismaleimide; and from 0.5 phr to 3.0 phr alkylphenol disulfide.

The rubber cure system and rubber composition of the invention may be made using any suitable method or methods, as well as any suitable, commercially available equipment.

Both the cure system and rubber composition of the invention have many uses. For example, if desired, a rubber composition incorporating the cure system may be used, in combination with polyester cord, to form any of a number of different reinforced rubber products.

### EXAMPLES

**Table I Compound Formulations**

| | **Control** | **Control** | **Control** | **Control** | | |
|---|---|---|---|---|---|---|
| | **Sample 1** | **Sample 2** | **Sample 3** | **Sample 4** | **Sample 5** | **Sample 6** |
| **Non-Productive** | | | | | | |
| Tackifier | 1 | 1 | 1 | 1 | 1 | 1 |
| Polybutadiene Rubber | 15 | 15 | 15 | 15 | 15 | 15 |
| Natural Rubber | 60 | 60 | 60 | 60 | 60 | 60 |
| Styrene-Butadiene Rubber | 34.37 | 34.37 | 34.37 | 34.37 | 34.37 | 34.37 |
| Resorcinol | 1 | 1 | 1 | 1 | 1 | 1 |
| Oil | 9 | 9 | 9 | 9 | 9 | 9 |
| Stearic Acid | 0.25 | 0.25 | 0.25 | 0.25 | 0.25 | 0.25 |
| Zinc Oxide | 3 | 3 | 3 | 3 | 3 | 3 |
| Carbon Black (N326) | 60 | 60 | 60 | 60 | 60 | 60 |

| **Productive** | | | | | | |
|---|---|---|---|---|---|---|
| Cyrez® CRA100 | 1.39 | 1.39 | 1.39 | 1.39 | 1.39 | 1.39 |
| Santocure®TBBS | | | 1.2 | | | |
| Santocure®TBSI | 0.84 | 1.2 | | | | |
| Perkacit®MBTS | 0.35 | | | 2 | 2 | 2 |
| HVA-2 | | | | | 1 | 1 |
| Vultac® 7 | | | | | 1 | 1 |
| Sulfur | 2.2 | 2.2 | 2.2 | 2.2 | 1.25 | 2.2 |

| | | | | | | |
|---|---|---|---|---|---|---|
| Perkacit®MBTS = Benzothiazole disulfide (Flexsys) | | | | | | |
| Cyrez® CRA100 = dry liquid concentrate hexamethoxymethylmelamine (HMMM) on a free flowing silica carrier (Cytec) | | | | | | |
| HVA-2 = N, N'-m-Phenylenedimaleimide (Dupont) | | | | | | |
| Santocure®TBSI = N-t-butyl-2-benzothiazole sulfenimide (Flexsys) | | | | | | |
| Vultac® 7 = Flaked alkylphenol disulfide (Atofina/Sovereign) | | | | | | |
| Santocure®TBBS = N-t-butyl-2-benzothiazole sulfenamide (Flexsys) | | | | | | |

**Table II Test Results**

| | **Control** | **Control** | **Control** | **Control** | | |
|---|---|---|---|---|---|---|
| | **Sample 1** | **Sample 2** | **Sample 3** | **Sample 4** | **Sample 5** | **Sample 6** |
| **Samples Cured 73 min/150°C** | | | | | | |
| Modulus, 100% (MPa) | 2.2 | 2.2 | 2.4 | 1.9 | 2.1 | 2.4 |
| Modulus, 150% (MPa) | 3.6 | 3.7 | 4.0 | 3.1 | 3.3 | 4.0 |
| Modulus, 200% (MPa) | 5.5 | 5.7 | 6.1 | 4.7 | 4.9 | 6.0 |
| Modulus, 300% (MPa) | 10.5 | 11.0 | 11.7 | 8.9 | 9.2 | 10.8 |
| Break Strength (MPa) | 18.3 | 17.8 | 14.2 | 16.7 | 15.0 | 14.8 |
| Elongation, % | 474 | 451 | 369 | 498 | 455 | 408 |

| **Peel Adhesion (Peel Temperature 121°C)** | | | | | | |
|---|---|---|---|---|---|---|
| Force, N | 169 | 126 | 111 | 191 | 356 | 230 |

The control samples (Control Sample 1, Control Sample 2, Control Sample 3, and Control Sample 4) and experimental samples (Sample 5, Sample 6) of Table I were formulated to provide comparable modulus values so comparisons in polyester cord adhesion to rubber could be made. Control Sample 1, Control Sample 2, and Control Sample 3 were formulated with amine containing curatives, N-t-butyl-2-benzothiazole sulfenimide in Control Sample 1 and Control Sample 2, and N-t-butyl-2-benzothiazole sulfenamide in Control Sample 3. In addition a non-amine containing formulation using benzothiazole disulfide (Perkacit®MBTS), Control Sample 4, is included for further comparison. The non-amine formulation of Control Sample 4 does not contain any alkylphenol disulfide (Vultac® 7) or N, N'-m-Phenylenedimaleimide (HVA-2) while Sample 5 and Sample 6 contains the curatives of Sample 4 but also are enhanced with both the alkylphenol disulfide (Vultac® 7) and N, N'-m Phenylenedimaleimide (HVA-2 ) polyester cord adhesion promoters claimed in this invention.

The polyester cords used for the evaluation were prepared from 1440 dTex adhesive activated high modulus low shrink polyester yarn which was twisted into a three ply cord with 4.5 turns per inch in the plies and 4.5 turns per inch in the cable. The cords were coated with conventional adhesives containing butadiene/styrene/vinylpyridine terpolymer latex, resorcinol/formaldedhyde resin, and a blocked isocyanate.

Two ply adhesion samples were prepared in a modified version of the ASTM D4393 strap peel adhesion test. Cure conditions were based on actual tire thermocouple data. A programmable press was used to reproduce the actual cure conditions (time at temperature) measured in farm tires at the top belt beneath a lug. The cure energy introduced was calculated to be the same as isothermal cures of 73 minutes at 150°C. Cured adhesion specimens were conditioned to 121°C and peeled in a 180 degree peel to measure the force required to separate the plies.

The adhesion test results of Table II show that the combination of alkylphenol disulfide (Vultac© 7) and N, N'-m-Phenylenedimaleimide (HVA-2 ) in Sample 5 and Sample 6 which also contains the non-amine curative benzothiazole disulfide (Perkacit®MBTS) improve polyester cord adhesion versus a cure package containing amine based curatives such as Control Sample 1, Control Sample 2, and Control Sample 3 and likewise can provide improvements in a non-amine containing cure package such as Control Sample 4.

**Table III Compound Formulations**

| | **Control** | **Control** | **Control** | | |
|---|---|---|---|---|---|
| | **Sample 7** | **Sample 8** | **Sample 9** | **Sample 10** | **Sample 11** |
| **Non-Productive** | | | | | |
| Tackifier | 1 | 1 | 1 | 1 | 1 |
| Polybutadiene | | | | | |
| Rubber | 15 | 15 | 15 | 15 | 15 |
| Natural Rubber | 60 | 60 | 60 | 60 | 60 |
| Styrene-Butadiene | | | | | |
| Rubber | 34.37 | 34.37 | 34.37 | 34.37 | 34.37 |
| Resorcinol | 1 | 1 | 1 | 1 | 1 |
| Oil | 9 | 9 | 9 | 9 | 9 |
| Stearic Acid | 0.25 | 0.25 | 0.25 | 0.25 | 0.25 |
| Zinc Oxide | 3 | 3 | 3 | 3 | 3 |
| Carbon Black (N326) | 60 | 60 | 60 | 60 | 60 |

| **Productive** | | | | | |
|---|---|---|---|---|---|
| Cyrez® CRA100 | 1.39 | 1.39 | 1.39 | 1.39 | 1.39 |
| Perkacit®MBTS | 2 | 2 | 2 | 2 | 2 |
| HVA-2 | | 1 | | 1 | 1 |
| Vultac® 7 | | | 1 | 1 | 1 |
| Sulfur | 2.2 | 2.2 | 2.2 | 1.25 | 2.2 |

**Table IV Test Results**

| | **Control** | **Control** | **Control** | | |
|---|---|---|---|---|---|
| | **Sample 7** | **Sample 8** | **Sample 9** | **Sample 10** | **Sample11** |
| **Samples Cured 73 min/150°C** | | | | | |
| Modulus, 100% (MPa) | 1.9 | 2.2 | 2.0 | 2.1 | 2.4 |
| Modulus, 150% (MPa) | 3.1 | 3.6 | 3.2 | 3.3 | 4.0 |
| Modulus, 200% (MPa) | 4.7 | 5.4 | 4.8 | 4.9 | 6.0 |
| Modulus, 300% (MPa) | 8.9 | 10.2 | 9.0 | 9.2 | 10.8 |
| Break Strength (MPa) | 16.7 | 17.7 | 15.9 | 15.0 | 14.8 |
| Elongation, % | 498 | 480 | 481 | 455 | 408 |

| **Peel Adhesion (Peel Temperature 121 °C)** | | | | | |
|---|---|---|---|---|---|
| Force, N | 191 | 217 | 206 | 256 | 230 |

A second set of experiments to define contributions of N, N'-m-Phenylenedimaleimide (HVA-2 ) and alkylphenol disulfide (Vultac® 7) to enhancing polyester cord adhesion in the non-amine based cure with benzothiazole disulfide (Perkacit®MBTS) was run with the formulations provided in Table III and results listed in Table IV. Control Sample 7 containing only the non-amine curative benzothiazole disulfide (Perkacit®MBTS) gave a peel adhesion force of 191 newtons. Addition of N, N'-m-Phenylenedimaleimide (HVA-2 ) to Control Sample 7 to give Control Sample 8 increased the peel adhesion force to 217 newtons, a 13.6 % improvement. Addition of alkylphenol disulfide (Vultac® 7) to Control Sample 7 to give Control Sample 9 likewise increased the peel adhesion force to 206 newtons, a 7.9 % improvement. However the best improvements in peel adhesion force was seen when both N, N'-m-Phenylenedimaleimide (HVA-2 ) and alkylphenol disulfide (Vultac® 7) were used in combination with the non-amine curative benzothiazole disulfide (Perkacit®MBTS). This is illustrated by Sample 10 and Sample 11 with peel adhesions of 256 newtons and 230 newtons respectively representing improvements of 34% and 20.4% respectively. Thus using N, N'-m-Phenylenedimaleimide (HVA-2 ) and alkylphenol disulfide (Vultac® 7) in combination with each other in a non-amine benzothiazole disulfide (Perkacit®MBTS) based cure gave peel adhesion values greater than either N, N'-m-Phenylenedimaleimide (HVA-2 ) or alkylphenol disulfide (Vultac® 7) gave when used alone.

## Claims

1. A rubber cure system, comprising:
an amine-free accelerator;
a bismaleimide; and
an alkylphenol disulfide.

2. The rubber cure system of claim 1, wherein the amine-free accelerator is a benzothiazole disulfide.

3. The rubber cure system of claim 1, wherein the bismaleimide is of the general formula: 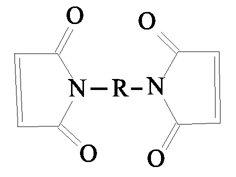 wherein R is divalent and is selected from the group consisting of acyclic aliphatic groups having from 2 to 16 carbon atoms, cyclic aliphatic groups having from 5 to 20 carbon atoms, aromatic groups having from 6 to 18 carbon atoms, and alkylaromatic groups having from 7 to 24 carbon atoms, and
wherein R may contain a hetero atom selected from O, N, and S; and/or wherein the alkylphenol disulfide is of the general formula: 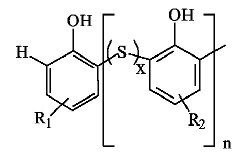 wherein R₁ and R₂ independently are selected from linear or branched C₁₋₁₀ alkyl groups, x independently is selected from an integer of 1 to 10, and n is an integer from 1 to 100.

4. The rubber cure system of claim 3, wherein R₁ and R₂ independently are tertiary alkyl groups, meta- or para- substituted on the aromatic group with respect to the hydroxy group.

5. The rubber cure system of at least one of the previous claims, wherein the amine-free accelerator is present in an amount of from 0.5 phr to 2.0 phr and/or wherein the bismaleimide is present in an amount of from 0.5 phr to 3.0 phr.

6. The rubber cure system of at least one of the previous claims, wherein the alkylphenol disulfide is present in an amount of from 0.5 phr to 3.0 phr.

7. A rubber composition, comprising the rubber cure system according to at least one of the previous claims and at least one sulfur-vulcanizable elastomer containing olefinic unsaturation.

8. The rubber composition of claim 7, wherein the rubber composition is in the form of a product.

9. The rubber composition of claim 8, wherein the product includes a reinforcing cord comprising a polyester.

10. The rubber composition of claim 8 or 9, wherein the product is selected from the group consisting of a tire ply, a tire belt, a tire overlay, a pneumatic tire, an airspring, a conveyor belt, a hose, and a power transmission belt.
